# EUROPEAN PATENT APPLICATION

(11) **EP 0 667 130 A2**
(43) Date of publication of application: **16.08.1995**
(21) Application number: 95101725.0
(22) Date of filing: 09.02.1995
(51) Int. Cl.: A61C 11/00

(54) **Dental articulator**

(30) Priority: 11.02.1994 IT RM940063
(71) Applicant: Talarico, Giorgio, I-00143 Rome (IT)
(72) Inventor: Talarico, Giorgio, I-00143 Rome (IT)
(74) Representative: Gervasi, Gemma, Dr.

(57) **Abstract**

The present invention relates to a dental articulator (1), and more particularly to a device permitting to precisely reproduce movements of the mandible with respect to the maxilla, useful in the production of orthodontic models and dental casts and in the correction of occlusions of natural dentition.

Said articulator (1) comprises horizontal baseplate (2), having a front and a rear side, provided at the rear side with generally vertical support means (3), an upper plate (4) holding a maxillary cast or model and a lower plate (5) holding a mandibulary cast or model. The lower plate (5) is connected to said upper plate (4) and it is characterized in that said upper plate (4) is hinged to said vertical support means (3) and can be moved upwardly from a horizontal position to expose both maxillary and mandibulary casts or models and said lower plate (5) is suspended to said upper plate (4) exclusively by means of two couples of elastically extensible means (45,46).

## Description

### FIELD OF THE INVENTION

The present invention relates to a dental articulator, and more particularly to a device permitting to precisely reproduce movements of the mandible with respect to the maxilla, useful in the production of orthodontic models and dental casts and in the correction of occlusions of natural dentition.

### PRIOR ART

Generally speaking, known dental articulators involve movement of the maxilla, which is the contrary of natural movement of the mandible. This can lead to a number of difficulties in the use of the articulator, as well as to errors in the final casts and/or models. Moreover, such articulators can offer only a limited choice of movement of the maxilla. EP-0 590 2008 A2 suggests a solution to such drawbacks by disclosing a device in which an upper plate supporting the maxilla replica is stationary, while a lower plate, supporting the mandible replica, can be moved, thus better simulating natural functions. However, this articulator presents the following disadvantages:
- it is unnecessarily overcomplicated, involving a number of adjustements that could easily dispensed with, as well as relevant adjusting devices which considerably add to the overall cost;
- can present the risk of disarticulation of the condylar joint;
- it is impossible to work on casts or models unless they are re-moved from the articulator, or the device is completely dismantled, thus requiring a number of adjustments to exactly relocate maxilla and mandible in relation to one another.

It is an object of present invention to eliminate such drawbacks, and particularly to present a dental articulator simple in construction and use and which can be opened and closed at will to consent interventions on the casts or models carried thereon still granting an automatic repositioning of upper and lower jaws precisely at the original location.

### DESCRIPTION OF THE INVENTION

Generally speaking, the articulator according to present invention comprises three main parts, namely a horizontal baseplate having a front and a rear side and bearing at the rear side generally vertical support means; an upper, hinged plate (maxilla); a lower plate suspended only by elastic means (mandible).

Vertical support means, which can be hinged to the baseplate if deemed necessary, are provided at their upper extremity and at the same vertical distance from baseplate with two horizontal elongated extensions directed towards said front side of baseplate and reciprocally spaced. Each of such horizontal extensions bears a housing for a horizontal pin extending through said upper hinged plate, which can thus pivot around said pin; vertical movement below the horizontal plane of said upper plate is prevented by suitable supports held, for instance, by the horizontal extensions.

Each of said horizontal extensions also bears a first upper block to which a second upper block, provided with a recess simulating the condylar fossa, is slidingly connected in the horizontal plane. Said second block has a generally parallelepiped form and presents a vertical through slot parallel to the long edges of said horizontal extensions and running along the upper part of said condylar fossa.

Said lower plate is laterally provided at each of its rear corners with a lower block to which is slidingly connected a vertical member bearing at its upper extremity a condyle element to be located in the condylar fossa. Each of said vertical members has a vertical slot vertically aligned with the center of said condyle element and housing an elastically extensible member, namely a spring, having a lower extremity firmly connected to said vertical member and an upper extremity connected to a metallic wire rod freely sliding through the upper part of said vertical member, said condylar element and said vertical through slot, and protruding from the upper surface of said second upper block, to be tensioned and firmly blocked here to elastically held the condyle within the condylar fossa.

Both upper and lower plates are provided near relevant front extremities with means to anchor a further elastically extensible member, namely a spring, elastically and releasably connecting said upper and lower plates.

Preferably, said second upper block is longitudinally divided into two parts, to be easily dismantled and substituted, for instance to modify the shape of the condylar fossa.

Still more preferably, said second block carries at its lower face a replaceable complex containing the condylar fossa, said complex being divided in two parts to be easily removed and replaced.

### DETAILED DESCRIPTION OF THE INVENTION

The present invention will now be described with reference to the enclosed drawings, in which a purely exemplary embodiment of same invention is presented, to be not intended as restrictive of the purposes and scope thereof.

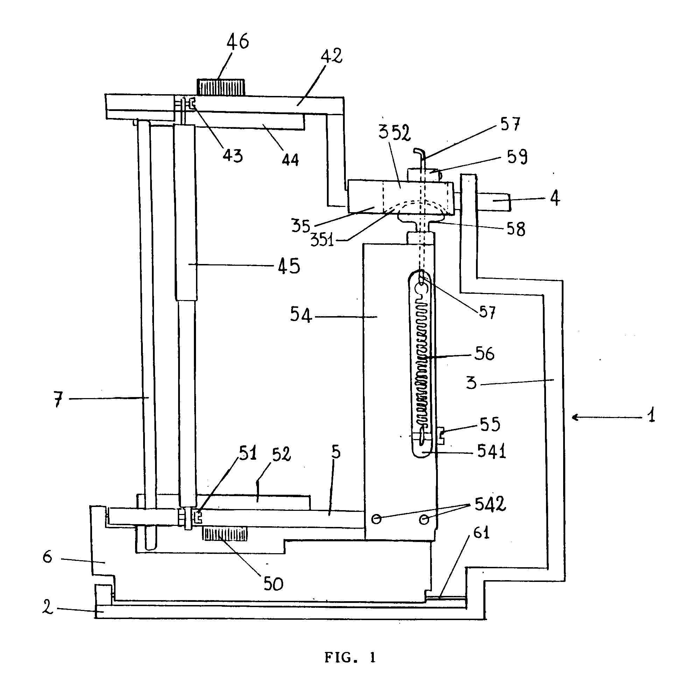

Fig. 1 represents a lateral view of present dental articulator;

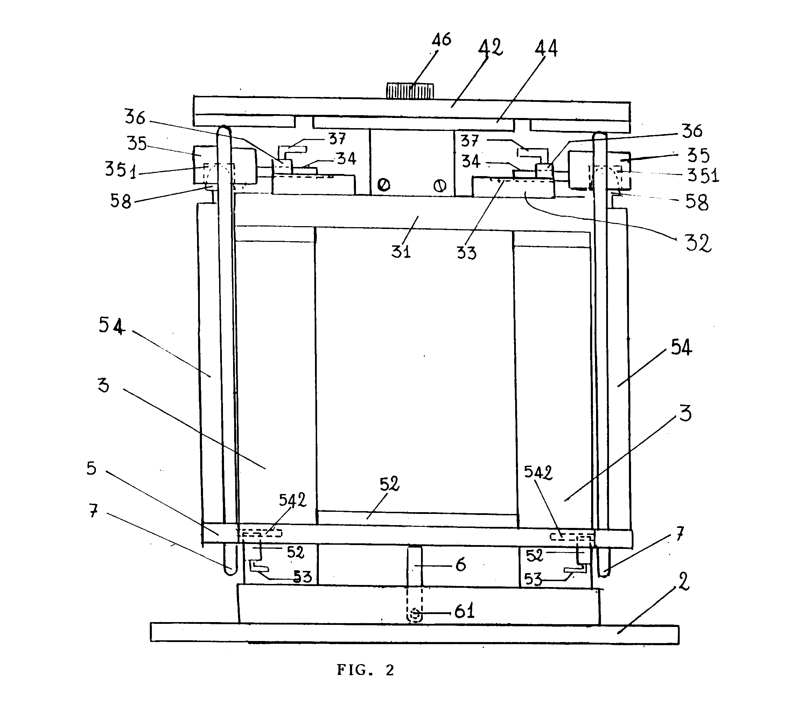

Fig. 2 is a frontal view of the articulator;
Fig. 3 is a top view of said articulator.

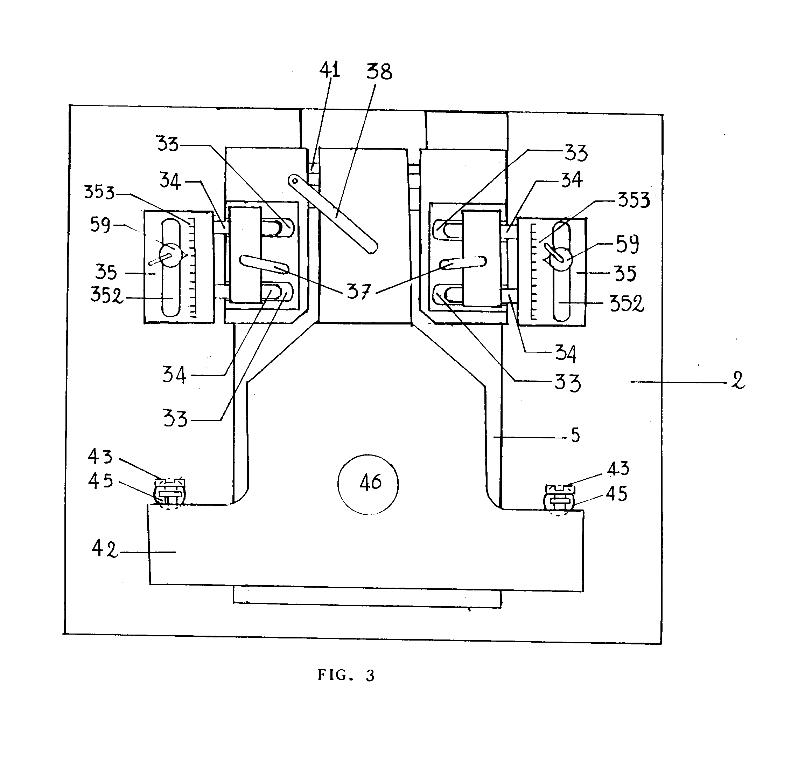

With reference to the Figures, an articulator 1 according to present invention comprises a baseplate 2 carrying at its rear end two generally vertical stands 3, having an empty space therebetween. Said vertical stands support, at their upper extremity, a plate 4, pivotably mounted on said stands around a pin 41 (Fig. 3). Plate 4 is fixed in the horizontal position by means of pivoting arm 38.

Plate 4 is Z shaped, with a first arm pivoting around pin 41 and a second arm directed towards the front part of articulator 1 and constituting a platform 42 parallel to plate 4.

Platform 42 releasably holds, through screw 46, block 44, to which a maxilla cast or model (not shown) is to be attached.

Said platform 42 can be provided with slides permitting its vertical movements, for reasons to be later discussed, and is provided with anchor means 43 for springs 45 elastically connecting said platform 42 with a bottom plate 5 through further anchor means 51.

Each of stands 3 bears a block 32 having two notches 33 slidably housing guide pins 34 integral with second block 35 provided with condylar fossa 351 upwardly terminating with through slot 352. Suitably slitted platelet 36 holds guide pins 34 in place and can be pressed against said block 32 and guide pins 34 or released by means of screws 37.

Bottom plate 5 is provided at each of its rear lateral edges with a system of block, guide pins 542, slitted platelets 52 and screws 53 similar to system comprising block 32, guide pins 34, platelet 36 and screws 37 and vertically placed below it.

Guide pins 542 hold a vertical member 54 provided with a vertical slit 541 housing a spring 56 connected to member 54 by screw 55 at its lower end while at its upper end hold pin 57 freely sliding through upper end portion of member 54, centreline of condyle 58, condylar fossa 351 and through slit 352, and protruding from upper face of block 35. Tension of spring 56 is adjusted by vertically sliding pin 57 and blocking it in the desired position by means of blocking means 59.

Bottom plate 5 releasably holds, through screw 50, block 52 intended to support a mandible cast or model (not shown).

Upper face of block 35 is provided with a graduation 353 permitting to precisely control location of pin 57 and hence of condyle 58.

In such a way, lower plate 5 is elastically connected to upper second block 5 and platform 42 by means of four springs, two of which, 45, placed at the front part of the device and two, 56, placed at rear part of same device, thus easy allowing the lower plate 5 to take any desired natural position with respect to upper plate 4 yet maintaining the condyles within the condylar fossae and avoiding any risk of altering relevant positions of different parts. Moreover, by simply disconnecting springs 45 from upper anchorages 43 it is possible to rotate upwardly plate 4, thus fully exposing maxillary and mandibulary casts or models and considerably facilitating the working operations.

A plate 6, pivoting around pin 61, can block lower plate 5 permitting easy transport of the entire device or holding the mandible in a fixed position. Unlocking plate 6 it is possible to study the condylar articulation as well as the movements of mandible with respect to the maxilla.

Vertical and horizontal reciprocal positions of upper and lower jaws are adjusted by modifying positions of blocks 44 and 52 as well as height of plaster bases placed on said blocks and holding said upper and lower jaws.

The vertical position of maxilla with respect to mandible can be also finely adjusted by vertically moving platform 42 by sliding it along pins (not shown) placed into vertical arm of plate 4.

Correct position of upper plate 4 and platform 42 can be controlled, in a known way, through graduated rods 7, which can then be eliminated to facilitate access to dental casts or models.

## Claims

1. Dental articulator comprising a horizontal baseplate, having a front and a rear side, provided at the rear side with generally vertical support means, an upper plate holding a maxillary cast or model and a lower plate holding a mandibulary cast or model, said lower plate being connected to said upper plate, characterized in that said upper plate (4) is hinged to said vertical support means (3) and can be moved upwardly from a horizontal position to expose both maxillary and mandibulary casts or models and said lower plate (5) is suspended to said upper plate (4) exclusively by means of two couples of elastically extensible means (45, 56).

2. Dental articulator according to claim 1 characterized in that plate (4) is Z shaped, with a first arm pivotable around a pin (41) housed in said vertical support means (3) and a second arm parallel to the first one and constituting a platform (42) directed towards the front end of articulator (1).

3. Dental articulator according to claim 1 characterized in that said vertical support means (3) are provided at their upper extremity and at the same vertical distance from baseplate (2) with two horizontal elongated extensions directed towards said front side of baseplate and reciprocally spaced, each of said horizontal extensions bearing a first upper block (32) to which a second upper block (35) is slidingly connected in a horizontal plane, said second block (35) being provided with a recess (351) simulating the condylar fossa.

4. Dental articulator according to claim 3 characterized in that said second upper block (35) has a vertical through slot (352) parallel to the long edges of said horizontal extensions and running along the upper part of said condylar fossa (351).

5. Dental articulator according to claim 4 characterized in that said second upper block (35) is longitudinally divided into two parts.

6. Dental articulator according to claim 4 characterized in that said second upper block (35) carries at its lower face a replaceable complex containing the condylar fossa, said complex being divided in two parts to be easily re- moved.

7. Dental articulator according to claim 1 characterized in that the members of a first of said couples of elastically extensible means (45, 56) are springs releasably connecting front parts of said platform (42) and lower plate (5), the latter being provided at each of its rear lateral edges with a lower block to which is slidingly connected through pins (542) a vertical member (54) bearing at its upper extremity a condyle (58) element to be located in the condylar fossa (351).

8. Dental articulator according to claim 7 characterized in that each of said vertical members (54) has a vertical slot (541) vertically aligned with the center of said condyle element (58) and housing an elastically extensible member (56) having a lower extremity firmly connected to said vertical member (54) and an upper extremity connected to a metallic wire rod (57) freely sliding through the upper part of said vertical member (54), said condylar element (58) and said vertical through slot (352), and protruding from the upper surface of said second upper block (35), to be tensioned and firmly blocked here.
